# EUROPEAN PATENT SPECIFICATION

(11) **EP 4 458 145 B1**
(45) Date of publication and mention of the grant of the patent: **29.04.2026**
(21) Application number: 24168093.3
(22) Date of filing: 02.04.2024
(51) Int. Cl.: F16C 19/06, F16J 15/3204, A01K 89/01, F16J 15/43, F16C 33/76

(54) **FISHING REEL**
ANGELROLLE
MOULINET DE PÊCHE

(30) Priority: 01.05.2023 JP 2023075608
(43) Date of publication of application: 06.11.2024
(73) Proprietor: Globeride, Inc., Higashikurume-shi, Tokyo 203-8511 (JP)
(72) Inventor: IRIE, Koki, Higashikurume-shi, 203-8511 (JP)
(74) Representative: Boult Wade Tennant LLP

(56) References cited:
- JP-A- 2021 158 930
- JP-B2- 5 443 187

## Description

### BACKGROUND OF THE INVENTION

### 1. TECHNICAL FIELD

The present invention relates to a fishing reel.

### 2. DESCRIPTION OF THE RELATED ART

Conventionally, a fishing reel provided with a reverse rotation prevention device on a drive shaft cylinder is known (JP 2019-50830 A). The reverse rotation prevention device includes an inner ring, an outer ring, and a plurality of rollers disposed inside the inner ring and the outer ring. The reverse rotation prevention device has a function of allowing rotation of the drive shaft cylinder and a rotor attached to the drive shaft cylinder in a fishing line winding direction and preventing rotation (Hereinafter, it is simply referred to as "reverse rotation".) in a reverse rotation direction opposite to this direction. In the fishing reel, a drive gear shaft is mechanically connected via a drive gear meshing with a pinion of the drive shaft cylinder, and the reverse rotation prevention device is configured to prevent reverse rotation of a handle attached to the drive gear shaft.

Furthermore, as a fishing reel, one provided with a magnetic fluid seal mechanism is known. The magnetic fluid seal mechanism includes a magnetic body, a ring-shaped magnet disposed on an outer circumferential side of the magnetic body, a first magnetic plate and a second magnetic plate disposed on both sides of the magnet in an axial direction, and a magnetic fluid disposed in a gap between a cylindrical member and a pair of the magnetic plates and held by a magnetic force. According to the magnetic fluid seal mechanism, while a gap with a drive shaft cylinder is sealed by the magnetic fluid, the rotation performance of the drive shaft cylinder is not deteriorated.
JP2021158930A relates to a fishing reel that prevents damage to each component due to input of a driving force larger than necessary, and reduces the size and weight. It discloses a fishing reel comprising a reverse rotation prevention device and a magnetic fluid seal mechanism disposed in front of the reverse rotation prevention device, wherein the reverse rotation prevention device comprises an inner ring, an outer ring and a plurality of rollers disposed between the inner ring and the outer ring, wherein the magnetic fluid seal mechanism comprises a cylindrical member disposed on a front side of the inner ring, a ring-shaped magnet, a first magnetic plate, a second magnetic plate and a magnetic fluid that is disposed in a gap between the cylindrical member and a pair of the magnetic plates and is held by a magnetic force, the fishing reel further comprising a cylindrical intermediate member that is disposed between the inner ring and the cylindrical member.

### RELEVANT REFERENCES

### LIST OF RELEVANT PATENT LITERATURE

Patent Literature 1: Japanese Application Publication No. 2019-050830

### SUMMARY OF THE INVENTION

In the conventional fishing reel, since the magnetic body and the inner ring of the reverse rotation prevention device are adjacent to each other in the axial direction or the magnetic body and the inner ring are integrated, there is a problem that magnetism easily leaks to a side of the reverse rotation prevention device and the rotation of the fishing reel becomes heavy. In other words, when the magnetism leaks to the side of the reverse rotation prevention device, members (for example, an inner ring and a roller) having magnetism in the reverse rotation prevention device are attracted to each other, and thus there is a problem that the rotation of a handle of the fishing reel becomes heavy.

The present invention has been made to solve such a problem, and an object thereof is to provide a fishing reel capable of lightening rotation of a handle of the fishing reel.

In order to solve the above problems, a fishing reel according to the present invention comprises: a reverse rotation prevention device that is accommodated in a body front portion of a reel body and prevents reverse rotation of a drive shaft cylinder rotated by a handle operation; and a magnetic fluid seal mechanism disposed in front of the reverse rotation prevention device, in which the reverse rotation prevention device comprises: an inner ring disposed outside the drive shaft cylinder; an outer ring disposed outside the inner ring; and a plurality of rollers disposed between the inner ring and the outer ring, and the magnetic fluid seal mechanism comprises: a cylindrical member that is a magnetic body and is disposed outside the drive shaft cylinder on a front side of the inner ring; a ring-shaped magnet disposed on an outer circumferential side of the cylindrical member; each of a first magnetic plate and a second magnetic plate having a ring shape and disposed on both sides of the magnet in an axial direction; and a magnetic fluid that is disposed in a gap between the cylindrical member and a pair of the magnetic plates and is held by a magnetic force. The fishing reel further comprises a cylindrical intermediate member that is disposed between the inner ring and the cylindrical member and is a non-magnetic body.

According to the present invention, since the intermediate member serving as a non-magnetic body is provided between the inner ring and the cylindrical member, magnetism is less likely to leak to a side of the reverse rotation prevention device. As a result, since the rotation is not hindered due to magnetic leakage, the rotation of the handle of the fishing reel can be lightened.

Furthermore, it is preferable that the intermediate member is disposed between the reverse rotation prevention device and the magnetic fluid seal mechanism.

According to the present invention, the magnetic leakage can be further prevented without hindering the function of each of the device and the mechanism.

Furthermore, it is preferable that the intermediate member is formed of metal. Furthermore, it is preferable that the intermediate member is formed of resin.

According to the fishing reel of the present invention, it is possible to lighten the rotation of the handle of the fishing reel.

### BRIEF DESCRIPTION OF THE DRAWINGS

FIG. 1 is a side view illustrating an overall configuration of a fishing reel according to a first embodiment of the present invention;
FIG. 2 is an enlarged cross-sectional view of FIG. 1;
FIG. 3 is an enlarged cross-sectional view of FIG. 2;
FIG. 4 is a schematic diagram illustrating a comparative example;
FIG. 5 is a schematic diagram illustrating a result of a magnetic force measurement test of a comparative example; and
FIG. 6 is a schematic diagram illustrating a result of a magnetic force measurement test of an example.

### DETAILED DESCRIPTION

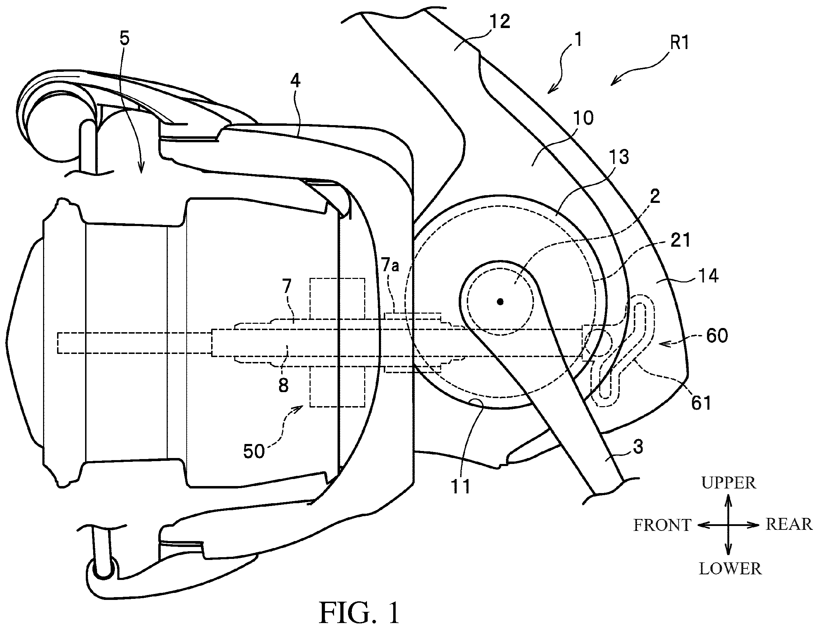

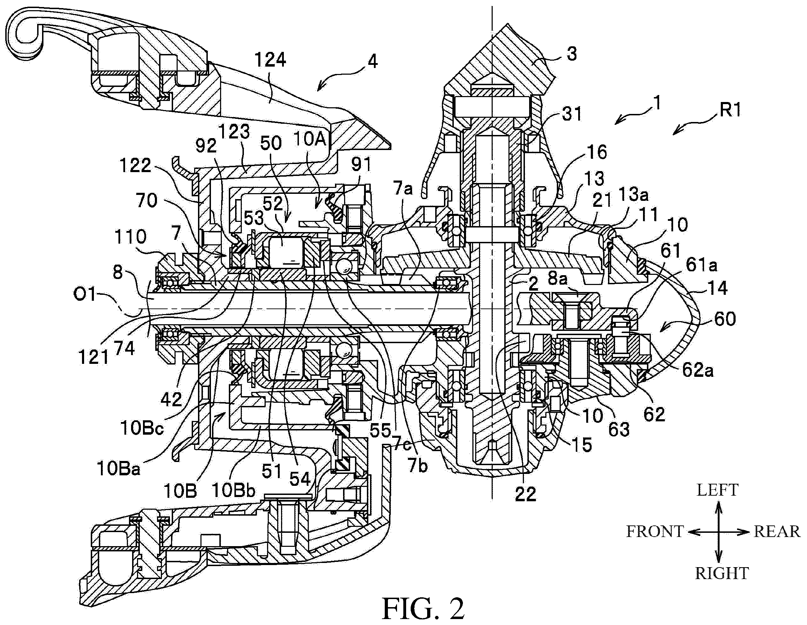

A fishing reel R1 according to each embodiment will be described with reference to the drawings. In the following description, terms "front and rear" and "up and down" are based on directions illustrated in FIG. 1, and terms "left and right" are based on directions illustrated in FIG. 2. In each embodiment, the same portions are denoted by the same reference signs, and a detailed description thereof will be omitted.

As will be described later, a fishing reel R1 of the present embodiment comprises a reverse rotation prevention device 50 that restricts reverse rotation of a drive shaft cylinder 7 (rotor 4) and a magnetic fluid seal mechanism 70 that prevents intrusion of water or the like.

First, a basic structure of the fishing reel R1 will be described. As illustrated in FIG. 1, the fishing reel R1 comprises a reel main body 1 to which a handle 3 is attached, a rotor 4 that is provided on a front side of the reel main body 1 and rotates by a winding operation of the handle 3, and a spool 5 that is provided on a front side of the rotor 4 and reciprocates in a front-rear direction by the winding operation of the handle 3.

The reel main body 1 comprises a body 10 in which a side opening portion 11 opened toward a left side is formed, a leg portion 12 extending upward from an upper portion of the body 10 and comprising a rod attachment portion attached to a fishing rod at a distal end, a lid member 13 closing the side opening portion 11, and a protection cover 14 attached to a rear portion of the body 10. Furthermore, the body 10 comprises a cylindrical body front portion 10A (see FIG. 2) through which the drive shaft cylinder 7 and a spool shaft 8 pass. The rotor 4 is attached to a front end of the drive shaft cylinder 7, and the spool 5 is attached to a front end of the spool shaft 8. Note that the body 10, the leg portion 12, and the body front portion 10A are integrally formed of a metal material and have high strength.

As illustrated in FIG. 2, the lid member 13 comprises a cylindrical insertion portion 13a to be inserted into the side opening portion 11. A male screw portion is formed on an outer circumferential surface of the insertion portion 13a. The male screw portion is screwed with a female screw portion formed on an inner circumferential surface of the side opening portion 11. By this screwing, the body 10 and the lid member 13 are integrated.

In the body 10, a drive gear shaft 2 extending in the left-right direction and a spool reciprocating device 60 are provided as a configuration for driving the drive shaft cylinder 7 and the spool shaft 8 in conjunction with the operation of the handle 3. The drive gear shaft 2 comprises a drive gear 21 and a gear 22. The drive gear shaft 2 is rotatably supported by the lid member 13 and the body 10 via left and right ball bearings 15 and 16. A connection portion 31 provided in the handle 3 is screwed to the drive gear shaft 2. As a result, the handle 3 and the drive gear shaft 2 rotate integrally.

The spool reciprocating device 60 comprises a slider 61 and an interlocking gear 62, and is configured such that the slider 61 moves in the front-rear direction along a guide shaft (not illustrated in the drawings) extending in the front-rear direction of the body 10. The slider 61 is fixed to a rear end of the spool shaft 8 by a fixing screw 8a, and comprises a guide groove 61a opened to a right side. The interlocking gear 62 is supported by a support member 63 provided on a right side wall of the body 10, and rotates while meshing with the gear 22 of the drive gear shaft 2. The interlocking gear 62 comprises an eccentric protrusion portion 62a that engages with the guide groove 61a of the slider 61.

As described above, when the drive gear shaft 2 and the gear 22 rotate by the winding operation of the handle 3, the interlocking gear 62 rotates, and the rotational motion is converted into a front-rear motion of the slider 61 via the eccentric protrusion portion 62a and the guide groove 61a. As a result, the spool shaft 8 (spool 5) reciprocates in the front-rear direction.

As illustrated in FIG. 2, the drive shaft cylinder 7 extends in a direction orthogonal to the drive gear shaft 2 and comprises a cavity portion extending in the axial direction. The drive shaft cylinder 7 is rotatably supported via a front bearing 7c provided in the body front portion 10A and a rear bearing 7b provided in the body 10. The spool shaft (support shaft) 8 is inserted into the cavity portion of the drive shaft cylinder 7 so as to be movable in the axial direction.

The body front portion 10A is formed in a substantially cylindrical shape centered on a central axis O1 of the drive shaft cylinder 7. The reverse rotation prevention device 50, an operation cover 10B, and the magnetic fluid seal mechanism 70 are assembled to the body front portion 10A.

The front bearing 7c is fitted into a rear inner side of the body front portion 10A. A ring-shaped retaining ring 55 that restricts the front bearing 7c from falling off is in contact with a front surface of the outer ring of the front bearing 7c.

As illustrated in FIG. 2, the rotor 4 is fitted to a front portion of the drive shaft cylinder 7. A front portion of the rotor 4 is fastened to the front portion of the drive shaft cylinder 7 via a retaining nut 110 screwed to the front portion. The rotor 4 comprises a boss portion 121, a rotor extension portion 122, a rotor cylinder portion 123, and a rotor leg portion 124.

The boss portion 121 is fitted to the front portion of the drive shaft cylinder 7 and has a cylindrical shape. As a result, the rotor 4 rotates in synchronization with the rotation of the drive shaft cylinder 7. The rotor extension portion 122 is a portion extending in a disk shape radially outward from a front portion of the boss portion 121. The rotor cylinder portion 123 extends rearward from an outer circumference of the rotor extension portion 122 and has a cylindrical shape. A pair of the rotor leg portions 124 are provided on the left and right, and extends obliquely upward from a lower end of the rotor cylinder portion 123.

The reverse rotation prevention device 50 is a rolling type one-way clutch that prevents the reverse rotation of the drive shaft cylinder 7 while allowing the forward rotation of the drive shaft cylinder 7 in a fishing line winding direction. On an inner circumferential side of the reverse rotation prevention device 50, an inner ring 51 that is fitted to an outer circumferential surface of the drive shaft cylinder 7 to be prevented from rotating around the drive shaft cylinder 7 is provided. Therefore, the reverse rotation prevention device 50 controls the rotation of the drive shaft cylinder 7 via the inner ring 51.

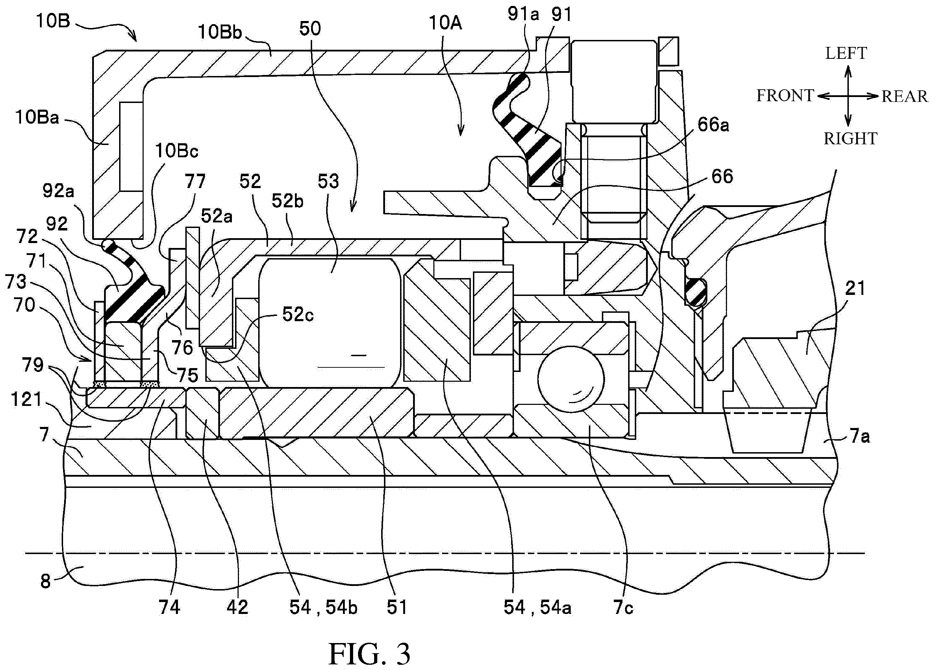

More specifically, the reverse rotation prevention device 50 comprises an inner ring 51, a substantially cylindrical outer ring 52, a plurality of rollers 53 disposed between the inner ring 51 and the outer ring 52, and a retainer 54 that holds the plurality of rollers 53. The inner ring 51 is fitted to the outer circumferential surface of the drive shaft cylinder 7 and rotates in synchronization with the drive shaft cylinder 7. The inner ring 51 is a magnetic body (for example, steel) in the present embodiment, but may be a non-magnetic body. The outer ring 52 and the rollers 53 are magnetic bodies (for example, steel). As illustrated in FIG. 3, the outer ring 52 comprises a front wall portion 52a and a circumferential wall portion 52b extending rearward from a radially outer side of the front wall portion 52a. A through hole 52c is formed in the front wall portion 52a. In the through hole 52c, a part of a retainer front portion 54b is disposed.

As illustrated in FIG. 3, the retainer 54 comprises a retainer rear portion 54a that holds a rear side of the roller 53 and the retainer front portion 54b that holds a front side of the roller 53. A protruding portion (not illustrated) that penetrates the outer ring 52 and protrudes radially outward is formed in the retainer 54. When the protruding portion moves in the circumferential direction, the retainer 54 rotates, and the roller 53 exerts a wedge action between the inner ring 51 and the outer ring 52 to prevent the reverse rotation of the inner ring 51 (drive shaft cylinder 7), or the roller 53 does not exert a wedge action between the inner ring 51 and the outer ring 52 to permit the reverse rotation of the inner ring 51 (drive shaft cylinder 7).

The operation cover 10B is a cylindrical member disposed on an outer circumferential side of the body front portion 10A. The operation cover 10B is rotatable with respect to the body front portion 10A, and has an engagement portion (not illustrated) with which the protruding portion of the reverse rotation prevention device 50 is engaged. Accordingly, when a user rotates the operation cover 10B, a reverse rotation prevention state and a reverse rotation permission state of the reverse rotation prevention device 50 are switched. The operation cover 10B comprises an operating part (not illustrated) that can be operated by the fingers of the user.

The operation cover 10B comprises a front wall portion 10Ba and a circumferential wall portion 10Bb. A through hole 10Bc is formed at a center of the front wall portion 10Ba. The magnetic fluid seal mechanism 70 is disposed in the through hole 10Bc. The circumferential wall portion 10Bb covers the circumference of the reverse rotation prevention device 50 and has a cylindrical shape.

The magnetic fluid seal mechanism 70 holds a magnetic fluid 79 and seals an opening portion of the body front portion 10A. The magnetic fluid seal mechanism 70 comprises a ring-shaped magnet 71, a ring-shaped outer magnetic plate (first magnetic plate) 72 disposed on a front side (outer side) of the magnet 71, a ring-shaped inner magnetic plate (second magnetic plate) 73 disposed on a rear side (inner side) of the magnet 71, a cylindrical member 74 that is a magnetic body disposed to face the magnet 71 with a gap, and the magnetic fluid 79. The magnet 71, the outer magnetic plate 72, and the inner magnetic plate 73 are integrally formed with an adhesive.

The magnet 71 is a permanent magnet, and has an N pole on the front side and an S pole on the rear side. Therefore, a magnetic circuit on an inner circumferential side and a magnetic circuit on an outer circumferential side are formed from a front surface to a rear surface of the magnet 71.

The cylindrical member 74 is a magnetic body having a cylindrical shape. The cylindrical member 74 may be fitted to the outer circumferential surface of the drive shaft cylinder 7, but is fitted to the outer circumferential surface of the boss portion 121 in the present embodiment. The cylindrical member 74 rotates in synchronization with the boss portion 121 (rotor 4).

The outer magnetic plate 72 and the inner magnetic plate 73 are formed of a material having high magnetic permeability, and constitute a magnetic circuit that concentrates magnetic flux generated from the magnet 71. An inner diameter of the outer magnetic plate 72 is formed to be slightly larger than an outer diameter of the cylindrical member 74. Therefore, a gap is formed between the outer magnetic plate 72 and the cylindrical member 74. An outer diameter of the outer magnetic plate 72 is larger than an outer diameter of the magnet 71.

The inner magnetic plate 73 comprises a ring-shaped inner circumferential portion 75 located on an inner circumferential side, an annular intermediate portion 76 extending radially outward from an outer circumferential edge of the inner circumferential portion, and an annular outer circumferential portion 77 continuous with an outer circumferential edge of the intermediate portion 76. The inner circumferential portion 75 is a portion for holding the magnet 71. An inner diameter of the inner circumferential portion 75 is formed to be slightly larger than the outer diameter of the cylindrical member 74. Therefore, a gap is formed between the inner circumferential portion 75 (inner magnetic plate 73) and the cylindrical member 74.

The intermediate portion 76 is disposed radially outside an outer circumferential surface of the magnet 71, and sandwiches a front seal member 92 in cooperation with the outer magnetic plate 72. The intermediate portion 76 is located rearward and inclined rearward from the inner circumferential side toward the outer circumferential side, and the inner circumferential portion 75 is located forward of the outer circumferential portion 77. Therefore, the magnet 71 held by the inner circumferential portion 75 is also disposed closer to the front, and is separated from the reverse rotation prevention device 50.

The outer circumferential portion 77 protrudes radially outward from the outer magnetic plate 72. That is, an outer diameter of the inner magnetic plate 73 is larger than an outer diameter of the outer magnetic plate 72.

The magnetic fluid 79 is configured by, for example, dispersing magnetic fine particles such as Fe3O4 in base oil. The gap between the outer magnetic plate 72 and the cylindrical member 74 and the gap between the inner magnetic plate 73 and the cylindrical member 74 are filled with the magnetic fluid 79.

From the above configuration, the magnetic flux generated on the inner circumferential side of the magnet 71 is concentrated and distributed on the inner circumferential side of the outer magnetic plate 72, the cylindrical member 74, and the inner circumferential side of the inner circumferential portion 75 (inner magnetic plate 73), and a magnetic circuit is formed. Therefore, large magnetism (magnetic force) acts on the gap between the outer magnetic plate 72 and the cylindrical member 74 and the gap between the inner magnetic plate 73 and the cylindrical member 74. As a result, since the magnetic fluid 79 filled in these gaps is held for a long period of time without flowing out, the sealability is extremely high.

A rear seal member 91 and the front seal member 92 are annular elastic seal members formed of an elastic material. Lip portions 91a and 92a protruding in the radial direction are formed in the rear seal member 91 and the front seal member 92, respectively.

The rear seal member 91 is fitted into a circumferential groove 66a of a largediameter portion 66. The lip portion 91a of the rear seal member 91 is in contact with an inner circumferential surface of the circumferential wall portion 10Bb of the operation cover 10B in a state of being pressed radially outward. The front seal member 92 is fitted into the outer circumferential surface of the magnet 71 of the magnetic fluid seal mechanism 70. The lip portion 92a of the front seal member 92 is in contact with an inner circumferential surface of the through hole 10Bc of the front wall portion 10Ba of the operation cover 10B in a state of being pressed radially outward. Therefore, sea water or the like does not enter the operation cover 10B through the through hole 10Bc.

As illustrated in FIG. 3, an intermediate member 42 is interposed between the inner ring 51 and the cylindrical member 74 in contact with each other. The intermediate member 42 is a cylindrical (ring-shaped) non-magnetic body, and is formed of, for example, metal or resin (fiber-reinforced resin, engineering plastic, other highstrength resin, and the like). Specifically, the intermediate member 42 is preferably made of a material having high strength and light weight, such as an aluminum alloy. An outer diameter of the intermediate member 42 is the same as an outer diameter of the inner ring 51 and an outer diameter of the cylindrical member 74. The intermediate member 42 is disposed between the reverse rotation prevention device 50 and the magnetic fluid seal mechanism 70. More specifically, the intermediate member 42 is disposed between the reverse rotation prevention device 50 and the magnetic fluid seal mechanism 70 and at a position facing the front wall portion 52a (a part of the retainer front portion 54b) in the left-right direction. An axial length of the intermediate member 42 may be appropriately set, but it is preferable that the magnetism of the magnetic fluid seal mechanism 70 does not leak to at least the inner ring 51. Furthermore, in the present embodiment, the intermediate member 42 is in contact with the inner ring 51 and the cylindrical member 74, but may be separated.

Since the fishing reel R1 according to the present embodiment described above comprises the cylindrical intermediate member 42 that is a non-magnetic body between the inner ring 51 and the cylindrical member 74, the magnetism of the magnetic fluid seal mechanism 70 is less likely to leak to a side of the reverse rotation prevention device 50. As a result, according to the present embodiment, while comprising the reverse rotation prevention device 50 and the magnetic fluid seal mechanism 70, since the rotation is not hindered due to magnetic leakage, the rotation of the handle 3 of the fishing reel R1 can be lightened.

Furthermore, in the present embodiment, since only the non-magnetic intermediate member 42 is inserted, assembly is good, weight reduction, size reduction, and cost reduction can be achieved. Furthermore, in a case where the length of the inner ring (clutch ring) 51 is unified due to downsizing and upsizing of the main body depending on the model of the fishing reel R1, since it is possible to cope with the fishing reels R1 of various sizes only by changing the axial length of the non-magnetic intermediate member 42, it is also possible to reduce the cost when variations are developed.

Furthermore, according to the present embodiment, since the intermediate member 42 is disposed between the reverse rotation prevention device 50 and the magnetic fluid seal mechanism 70, it is possible to further prevent magnetic leakage without hindering the functions of each of the device and the mechanism.

Furthermore, since the intermediate member is formed of metal or resin having high strength, buckling and creep can be prevented, and the rotation of the handle 3 of the fishing reel R1 can be lightened without hindering the function of each of the device and the mechanism. Furthermore, by forming the intermediate member 42 with an aluminum alloy or a fiber-reinforced resin, the strength can be increased, and also, the weight can be reduced.

Note that although the embodiment of the present invention has been described, design change can be appropriately made without departing from the spirit of the present invention. For example, in the present embodiment, the present invention is applied to a spinning reel, but can also be applied to a double-shaft reel (bait reel).

### [Examples]

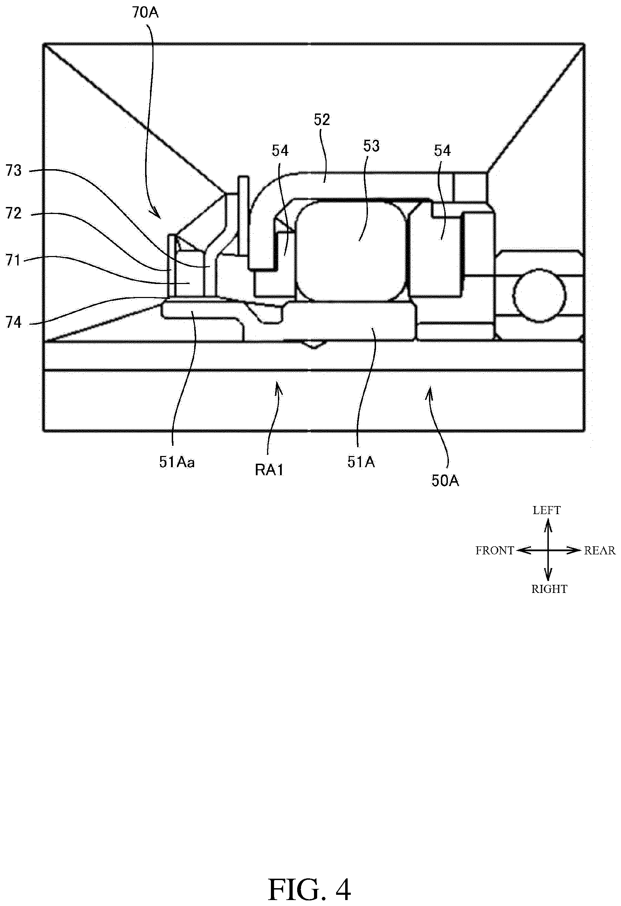

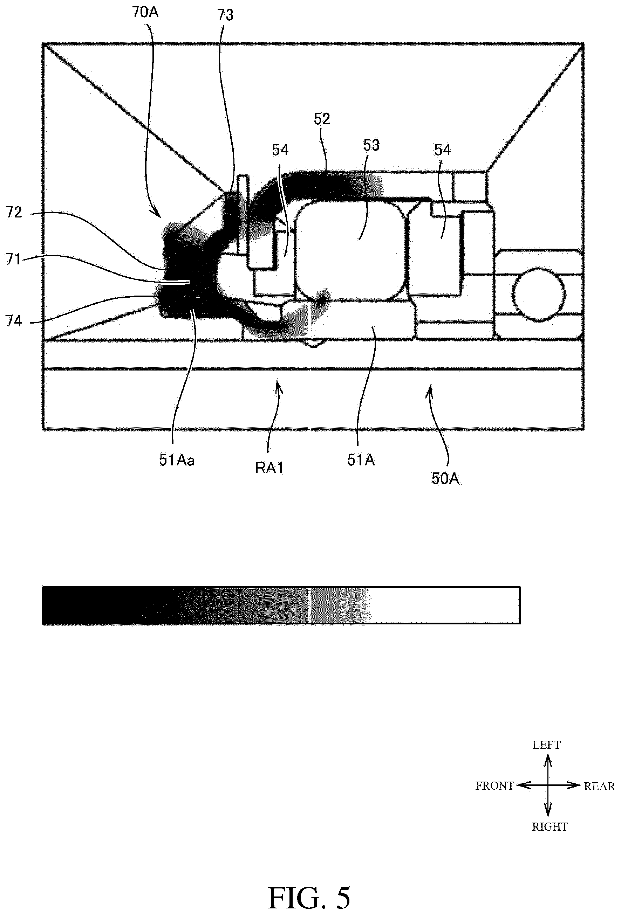

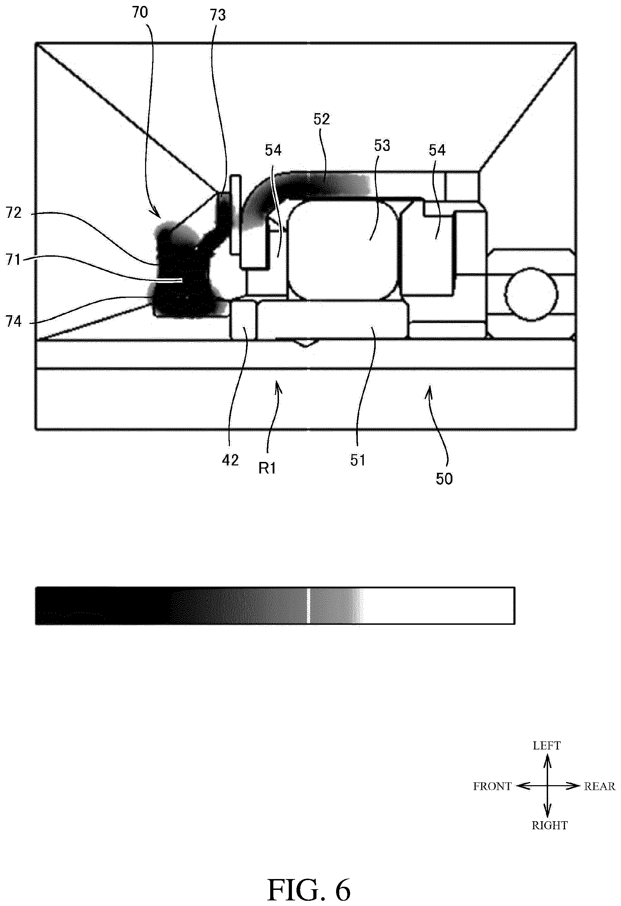

A fishing reel of a comparative example and the fishing reel R1 of the present embodiment were prepared, and a magnetic force measurement test was performed to verify the effect of the present invention. FIG. 4 is a schematic diagram illustrating a comparative example. FIG. 5 is a schematic diagram illustrating a result of a magnetic force measurement test of a comparative example. FIG. 6 is a schematic diagram illustrating a result of a magnetic force measurement test of an example. As illustrated in FIG. 4, a fishing reel RA1 of the comparative example comprises a reverse rotation prevention device 50A and a magnetic fluid seal mechanism 70A. A difference from the above embodiment is that an inner ring 51A of the reverse rotation prevention device 50A also serves as a magnetic body of the magnetic fluid seal mechanism 70A. That is, a distal end portion 51Aa of the inner ring 51A is disposed to face an outer magnetic plate (first magnetic plate) 72 and an inner magnetic plate 73 (second magnetic plate), and the distal end portion 51Aa functions as a magnetic body of the magnetic fluid seal mechanism 70A.

In a magnetic force measurement test result of FIG. 5, a magnitude of magnetism (magnetic force) is represented by color shading. That is, a dark color portion indicates that magnetism is large, and a light color portion indicates that magnetism is small. As illustrated in FIG. 5, the magnetism of the magnetic fluid seal mechanism 70A increases around a magnet 71, and further extends to a roller 53 along the inner ring 51A. Furthermore, the magnetism is transmitted from the inner magnetic plate 73 to an outer ring 52, and further extends toward a rear portion of the outer ring 52. As described above, in the fishing reel RA1 of the comparative example, it can be seen that the magnetism of the magnetic fluid seal mechanism 70A leaks to each component of the reverse rotation prevention device 50A. As a result, in the fishing reel RA1, there is a risk that the inner ring 51A and the roller 53, which are magnetic bodies, are attracted to each other and the rotation becomes heavy.

On the other hand, as illustrated in FIG. 6, according to the fishing reel R1 of the present embodiment according to an example, magnetism is not transmitted to the intermediate member 42 and the inner ring 51 which are non-magnetic bodies. In other words, by providing the intermediate member 42 that is a non-magnetic body, it is possible to prevent the magnetism of the magnetic fluid seal mechanism 70 from leaking to the inner ring 51. As a result, since the inner ring 51 and the roller 53 do not attract each other, the rotation of the fishing reel R1 can be lightened.

### REFERENCE SIGNS LIST

- 1: reel body
- 2: drive gear shaft
- 3: handle
- 7: drive shaft cylinder
- 10: body
- 42: intermediate member
- 50: reverse rotation prevention device
- 51: inner ring
- 52: outer ring
- 53: roller
- 70: magnetic fluid seal mechanism
- 71: magnet
- 72: outer magnetic plate (first magnetic plate)
- 73: inner magnetic plate (second magnetic plate)
- 74: cylindrical member
- R1: fishing reel

## Claims

1. A fishing reel comprising:
a reverse rotation prevention device (50) that is accommodated in a body front portion of a reel body and prevents reverse rotation of a drive shaft cylinder rotated by a handle operation; and
a magnetic fluid seal mechanism (70) disposed in front of the reverse rotation prevention device,
wherein the reverse rotation prevention device comprises:
an inner ring (51) disposed outside the drive shaft cylinder;
an outer ring (52) disposed outside the inner ring; and
a plurality of rollers (53) disposed between the inner ring and the outer ring, and
the magnetic fluid seal mechanism comprises:
a cylindrical member (74) that is a magnetic body and is disposed outside the drive shaft cylinder on a front side of the inner ring;
a ring-shaped magnet (71) disposed on an outer circumferential side of the cylindrical member;
each of a first magnetic plate (72) and a second magnetic plate (73) having a ring shape and disposed on both sides of the magnet in an axial direction; and
a magnetic fluid (79) that is disposed in a gap between the cylindrical member and a pair of the magnetic plates and is held by a magnetic force,
the fishing reel further comprising a cylindrical intermediate member (42) that is disposed between the inner ring and the cylindrical member and is a non-magnetic body.

2. The fishing reel according to claim 1, wherein the intermediate member is disposed between the reverse rotation prevention device and the magnetic fluid seal mechanism.

3. The fishing reel according to claim 1, wherein the intermediate member is formed of metal.

4. The fishing reel according to claim 1, wherein the intermediate member is formed of resin.

## Patentansprüche

1. Angelrolle, umfassend:
eine Rückwärtsdrehverhinderungsvorrichtung (50), die in einem vorderen Körperabschnitt eines Rollenkörpers untergebracht ist und Rückwärtsdrehung eines Antriebswellenzylinders, der durch eine Griffbetätigung gedreht wird, verhindert; und
einen magnetischen Fluiddichtungsmechanismus (70), der vor der Rückwärtsdrehverhinderungsvorrichtung angeordnet ist,
wobei die Rückwärtsdrehverhinderungsvorrichtung umfasst:
einen inneren Ring (51), der außerhalb des Antriebswellenzylinders angeordnet ist;
einen äußeren Ring (52), der außerhalb des inneren Rings angeordnet ist; und
eine Vielzahl von Walzen (53), die zwischen dem inneren Ring und dem äußeren Ring angeordnet sind, und
der magnetische Fluiddichtungsmechanismus umfasst:
ein zylindrisches Element (74), das ein Magnetkörper ist und außerhalb des Antriebswellenzylinders auf einer Vorderseite des inneren Rings angeordnet ist;
einen ringförmigen Magneten (71), der an einer äußeren Umfangsseite des zylindrischen Elements angeordnet ist;
jeweils eine erste Magnetplatte (72) und eine zweite Magnetplatte (73), die eine Ringform aufweisen und auf beiden Seiten des Magneten in einer Axialrichtung angeordnet sind; und
ein magnetisches Fluid (79), das in einem Spalt zwischen dem zylindrischen Element und einem Paar der Magnetplatten angeordnet ist und durch eine Magnetkraft gehalten wird,
wobei die Angelrolle weiter ein zylindrisches Zwischenelement (42) umfasst, das zwischen dem inneren Ring und dem zylindrischen Element angeordnet ist und ein nichtmagnetischer Körper ist.

2. Angelrolle nach Anspruch 1, wobei das Zwischenelement zwischen der Rückwärtsdrehverhinderungsvorrichtung und dem magnetischen Fluiddichtungsmechanismus angeordnet ist.

3. Angelrolle nach Anspruch 1, wobei das Zwischenelement aus Metall gebildet ist.

4. Angelrolle nach Anspruch 1, wobei das Zwischenelement aus Harz gebildet ist.

## Revendications

1. Moulinet de pêche comprenant :
un dispositif d'empêchement de rotation inverse (50) qui est logé dans une partie avant d'un corps du moulinet et empêchant la rotation inverse d'un cylindre d'arbre d'entraînement actionné par une manivelle ; et
un mécanisme d'étanchéité à fluide magnétique (70) disposé devant le dispositif d'empêchement de rotation inverse,
dans lequel le dispositif d'empêchement de rotation inverse comprend :
un anneau intérieur (51) disposée à l'extérieur du cylindre de l'arbre d'entraînement ;
un anneau extérieur (52) disposée à l'extérieur de l'anneau intérieur ; et
une pluralité de rouleaux (53) disposés entre l'anneau intérieur et l'anneau extérieur, et
le mécanisme d'étanchéité magnétique comprend :
un élément cylindrique (74) qui est un corps magnétique et est disposé à l'extérieur du cylindre de l'arbre d'entraînement sur un côté avant de l'anneau intérieur ;
un aimant en forme d'anneau (71) disposé sur un côté circonférentiel extérieur de l'élément cylindrique ;
chacune d'une première plaque magnétique (72) et d'une seconde plaque magnétique (73) présentant une forme annulaire et disposée de part et d'autre de l'aimant dans une direction axiale ; et
un fluide magnétique (79) qui est disposé dans un espace entre l'élément cylindrique et une paire de plaques magnétiques et qui est maintenu par une force magnétique,
le moulinet de pêche comprenant en outre un élément intermédiaire cylindrique (42) qui est disposé entre l'anneau intérieur et l'élément cylindrique et qui est un corps non magnétique.

2. Moulinet de pêche selon la revendication 1, dans lequel l'élément intermédiaire est disposé entre le dispositif d'empêchement de rotation inverse et le mécanisme d'étanchéité à fluide magnétique.

3. Moulinet de pêche selon la revendication 1, dans lequel l'élément intermédiaire est formé de métal.

4. Moulinet de pêche selon la revendication 1, dans lequel l'élément intermédiaire est formé de résine.
